# EUROPÄISCHE PATENTSCHRIFT

(11) **EP 4 097 429 B1**
(45) Veröffentlichungstag und Bekanntmachung des Hinweises auf die Patenterteilung: **10.01.2024**
(21) Anmeldenummer: 20839303.3
(22) Anmeldetag: 21.12.2020
(51) Int. Cl.: G01G 19/02, B60G 17/015, G01L 1/00

(54) **FAHRWERKBAUTEIL FÜR EIN KRAFTFAHRZEUG**
RUNNING GEAR COMPONENT FOR A VEHICLE
COMPOSANT DE TRAIN ROULANT POUR UN VEHICULE

(30) Priorität: 31.01.2020 DE 102020201201
(43) Veröffentlichungstag der Anmeldung: 07.12.2022
(73) Patentinhaber: ZF Friedrichshafen AG, 88046 Friedrichshafen (DE)
(72) Erfinder: MÜLLER, Ingolf, 76872 Minfeld (DE); STIEGLITZ, Andre, 49086 Osnabrück (DE); JUNG, Frank, 27232 Sulingen (DE); WERRIES, Christoph, 49143 Bissendorf (DE)
(74) Vertreter: ZF Friedrichshafen AG
(86) Internationale Anmeldenummer: PCT/EP2020/087366
(87) Internationale Veröffentlichungsnummer: WO 2021/151590

(56) Entgegenhaltungen:
- DE-A1- 10 153 970
- DE-A1-102011 089 605
- DE-A1-102016 224 719

## Beschreibung

Die Erfindung betrifft ein Fahrwerkbauteil für ein Kraftfahrzeug, an dem zumindest ein Sensor zur Detektion einer mechanischen Belastung angeordnet ist. Des Weiteren betrifft die Erfindung die Verwendung eines als Schalter ausgeführten Sensors zur Detektion einer mechanischen Belastung an einem Fahrwerkbauteil für ein Kraftfahrzeug.

Grundsätzlich stellen Fahrwerkbauteile Hebelkonstruktionen dar, die im Betrieb des Kraftfahrzeugs ruck- oder stoßförmig belastet werden. Dabei treten unter anderem Zug- und Druckbelastungen im Fahrwerkbauteil auf. Die Überwachung der auftretenden Kräfte in Fahrwerkbauteilen ermöglicht es, Ermüdungserscheinungen rechtzeitig zu erkennen und damit eine ausreichende Sicherheit für solche Fahrwerkbauteile gewährleisten zu können. Vielfach ist es üblich, Fahrwerkbauteile an Kraftfahrzeugen während ihrer Lebensdauer nur im Rahmen von nach einem festen Fristenplan durchgeführten Wartungen zu überwachen und gegebenenfalls auszutauschen oder zu reparieren. Dies führt dazu, dass Strukturen häufig überdimensioniert werden müssen, um ein sehr langsames Degradationsverhalten einzustellen, um für die Dauer der Wartungsintervalle die Funktionssicherheit des Fahrwerkbauteils zu gewährleisten.

Eine weitere Überbemessung findet in Folge der Absicherung gegen sogenannte Missbrauchsszenarien statt. Ein solches Missbrauchsszenario ist beispielsweise der Ansatz eines Wagenhebers an einem Fahrwerkbauteil mit dem daraus resultierenden Lastfall einer Biegebelastung. Aber auch das Fahren gegen einen hohen Bordstein mit einem Rad des Fahrzeugs kann zu einer besonderen mechanischen Belastung des Fahrwerkbauteils durch in axialer Richtung wirkende Kräfte führen. Bei einer Achsstrebe als sicherheitsrelevantem Fahrwerkbauteil kann dies zu einer erheblichen Schädigung und zu einem unsicheren Weiterbetrieb der Struktur führen.

Insbesondere in der Faserverbundbauweise für ein Fahrwerkbauteil ist eine konstruktive Lösung für die Berücksichtigung von Missbrauchsszenarien oder besonderen, insbesondere stoßartigen, Belastungen mit einer erheblichen Zusatzmasse und entsprechenden Mehrkosten für das Fahrwerkbauteil verbunden. Darüber hinaus ist die Zusatzmasse eine unerwünschte Auswirkung der Überbemessung, da durch die Ausführung des Fahrwerkbauteils in Faserverbundbauweise gegenüber der Verwendung von Metall gerade eine Gewichtsreduktion erreicht werden soll.

Aus der DE 101 53 970 A1 ist ein faserverstärktes Fahrwerkbauteil für ein Kraftfahrzeug bekannt. Das Fahrwerkbauteil besteht aus faserverstärkten Kunststoffen oder Kunststoffverbundsystemen. In den Kunststoffanteil des Fahrwerkbauteils ist ein Sensor zur Messung von an dem Fahrwerkbauteil auftretenden Belastungen integriert. Der Sensor ist hierfür als Dehnungsmessstreifen, als Piezoelement oder als ein Beschleunigungssensor ausgebildet.

Die Dokumente DE 10 2011 089605 A1 und DE 10 2016 224719 A1 offenbaren ebenfalls Fahrwerkbauteile für ein Kraftfahrzeug,

Ausgehend von dem vorstehend beschriebenen Stand der Technik ist es nun die Aufgabe der vorliegenden Erfindung, ein Fahrwerkbauteil für ein Kraftfahrzeug, an dem zumindest ein Sensor zur Detektion einer mechanischen Belastung angeordnet ist, weiterzubilden, wobei der zumindest eine Sensor kostengünstiger ist.

Diese Aufgabe wird aus vorrichtungstechnischer Sicht ausgehend vom Oberbegriff des Anspruchs 1 in Verbindung mit dessen kennzeichnenden Merkmalen gelöst. Die hierauf folgenden abhängigen Ansprüche geben jeweils vorteilhafte Weiterbildungen der Erfindung wieder.

Gemäß der Erfindung wird ein Fahrwerkbauteil für ein Kraftfahrzeug, umfassend zumindest zwei Lasteinleitungsbereiche, die jeweils durch einen Verbindungsabschnitt miteinander verbunden sind, vorgeschlagen, wobei an dem Fahrwerkbauteil zumindest ein Sensor zur Detektion einer mechanischen Belastung angeordnet ist, wobei der zumindest eine Sensor als ein Schalter einer elektrischen Schaltung ausgeführt ist, mit zumindest zwei Lasteinleitungselementen, an denen jeweils zumindest ein Schaltelement angeordnet ist, die in eine offene Schaltstellung und eine geschlossene Schaltstellung überführbar sind, wobei jeweils ein Lasteinleitungselement mit einem der Lasteinleitungsbereiche verbunden ist, durch welche eine in axialer Richtung des Verbindungsabschnittes wirkende Belastung auf das jeweilige Lasteinleitungselement übertragbar ist, wobei eine Überschreitung eines Belastungsgrenzwertes durch eine von den zumindest zwei Lasteinleitungselementen aufgenommene Belastung eine Änderung einer Schaltstellung zumindest zweier miteinander korrespondierender Schaltelemente bewirkt. Als miteinander korrespondierende Schaltelemente sind die Schaltelemente eines jeden Lasteinleitungselementes anzusehen, durch die in ihrer geschlossenen Schaltstellung eine elektrisch leitende Verbindung herstellbar ist. Eine in axialer Richtung des Verbindungsabschnittes wirkende Belastung sind Zugkräfte oder Druckkräfte, die von den Lasteinleitungsbereichen des Fahrwerkbauteils in den Verbindungsabschnitt eingeleitet werden und dort zu einer Verformung in Form einer Dehnung oder Stauchung führen. Die Dehnung oder Stauchung lässt sich durch die fixe Verbindung der Lasteinleitungselemente mit den Lasteinleitungsbereichen auf die Lasteinleitungselemente übertragen. Die Dehnung oder Stauchung des Verbindungsabschnittes und die damit verbundene Relativbewegung der beiden Lasteinleitungselemente wird verwendet, um bei einer entsprechenden Größenordnung der aufgenommenen Belastung die Schaltstellung zumindest zweier miteinander korrespondierender Schaltelemente zu verändern.

Gegenüber den aus dem Stand der Technik bekannten Sensoren ist der erfindungsgemäße Schalter einfacher herzustellen und somit kostengünstiger. Das Fahrwerkbauteil kann einem Faserverbundwerkstoff oder einem metallischen Werkstoff bestehen. Das aus einem Faserverbundwerkstoff bestehende Fahrwerkbauteil kann beispielsweise als ein im Pultrusionsverfahren oder im Spritzguss hergestelltes Bauteil ausgeführt sein. Zur Herstellung des Fahrwerkbauteils kommt insbesondere in Abhängigkeit vom verwendeten Material ein entsprechend geeignetes Herstellverfahren zur Anwendung. Der erfindungsgemäße Schalter ermöglicht es auf einfache Weise das Auftreten einer Überlast an dem Fahrwerkbauteil durch in axialer Richtung wirkender Belastungen, d.h. Zugkräfte und/oder Druckkräfte, durch ein autonomes mechatronisches System zu detektieren und anschließend auf Fahrzeugebene weitere Aktionen abzuleiten. Weitere Aktionen können beispielsweise das Aktivieren einer Warnleuchte, die Unterbrechung des Fahrzeugbetriebes, das Vornehmen eines Logbuch-Eintrag sein. Bei einer Ereignisdetektion einer Überlast kann beispielsweise mittels einfacher LED-Signalleuchten im Instrumentenbereich des Fahrzeuges eine zu hohe Last bzw. eine Missbrauchslast signalisiert werden. Darüber hinaus kann durch ein Steuergerät eine Auswertung stattfinden. So kann in dem Steuergerät beispielsweise eine Zählschleife hinterlegt werden, welche die Anzahl der Lastüberschreitungen im Sinne eines Lebensdauerzählers detektiert um dann gegebenenfalls bei Überschreiten eines Zählerschwellwertes eine Weiterfahrt zu unterbinden.

Insbesondere kann die Schaltung eine Stromquelle umfassen, die als externe Stromquelle oder als eine in das Fahrwerkbauteil integrierte Stromquelle ausgeführt ist. Insbesondere bei einer in das Fahrwerkbauteil integrierten Stromquelle kann diese als sogenanntes Energy Harvesting Modul ausgeführt sein. Unter dem Begriff Energy Harvesting Modul ist eine generatorisch arbeitende Vorrichtung zu verstehen, welche in das Fahrwerkbauteil integriert ist, und beispielsweise aufgrund auftretender Vibrationen im Fahrwerkbauteil Strom erzeugt.

Bevorzugt können zumindest zwei miteinander korrespondierend angeordnete Schaltelemente sich bei einer unterhalb des Belastungsgrenzwertes liegenden Belastung in der geschlossenen Schaltstellung befinden. Der Stromkreis der elektrischen Schaltung bleibt somit dauerhaft geschlossen, bis eine Relativbewegung der Lasteinleitungselemente zueinander zu einer Änderung der Schaltstellung der zumindest zwei Schaltelemente führt. Dies hat den Vorteil, dass die Funktionalität der Schaltung und der damit verbundenen Überwachung des Fahrwerkbauteils permanent überwacht werden kann.

Dabei sind die Lasteinleitungselemente parallel zum Verbindungsabschnitt und gegenüber dem Verbindungsabschnitt relativbeweglich angeordnet.

Bevorzugt kann das jeweilige Lasteinleitungselement als ein stabförmiges Bauteil ausgeführt sein, welches mit einem Ende mit einem der Lasteinleitungsbereiche verbunden ist und mit seinem freien Ende dem gegenüberliegenden Lasteinleitungsbereich zugewandt ist. Die freien Enden der stabförmigen Bauteile können zueinander beabstandet sein. Denkbar ist aber auch, dass die freien Enden der stabförmigen Bauteile einander abschnittsweise kontaktieren.

Insbesondere können die Schaltelemente an einander in axialer Richtung überlappenden Abschnitten an den freien Enden der einander gegenüberliegend angeordneten Lasteinleitungselemente als elektrisch leitende Kontaktbereiche ausgebildet sein, die in geschlossener Schaltstellung einander berühren.

Dabei können an den freien Enden jeweils zumindest zwei elektrisch leitende Kontaktbereiche angeordnet sein, wobei ein Kontaktbereich mit einer ersten Erstreckung und ein Kontaktbereich mit einer zweiten Erstreckung in axialer Richtung des Bauteils ausgeführt ist, wobei die erste Erstreckung größer als die zweite Erstreckung ist. Die jeweilige Erstreckung bestimmt die erforderliche Relativbewegung der Lasteinleitungselemente zueinander, um eine Änderung der Schaltstellung zu bewirken. Durch die Dimensionierung der Erstreckungen der zumindest zwei Kontaktbereiche der Schaltelemente lassen sich somit zumindest zwei unterschiedliche Belastungsgrenzwerte für Zugkräfte festlegen. Das Passieren eines ersten Belastungsgrenzwertes infolge einer Zugkraftbeaufschlagung führt dazu, dass zunächst nur die Kontaktbereiche der Schaltelemente voneinander getrennt werden, deren Erstreckung kleiner als die Dehnung des Fahrwerkbauteils ist. Erst mit dem Passieren eines zweiten Belastungsgrenzwertes infolge der Zugkraftbeaufschlagung werden auch die Kontaktbereiche der Schaltelemente voneinander getrennt werden, die mit der zweiten Erstreckung ausgeführt sind.

Gemäß einer bevorzugten Weiterbildung können die freien Enden der einander gegenüberliegend angeordneten Lasteinleitungselemente komplementäre, rampenförmige Anlageflächen aufweisen, die in geschlossener Schaltstellung der Schaltelemente einen axialen Abstand zueinander aufweisen. Durch diese Ausbildung der freien Enden der Lasteinleitungselemente können auf das Fahrwerkbauteil aufgeprägte Druckkräfte durch den Schalter detektiert werden. Durch die Druckkräfte wird eine Relativbewegung der beiden Lasteinleitungselemente hervorgerufen, welche die beiden Schaltelemente axial in Richtung des jeweiligen gegenüberliegenden Lasteinleitungsbereiches, d.h. aufeinander zu, verschiebt. Dadurch bewegen sich die rampenförmigen Anlageflächen aufeinander zu und beginnen sich nach Überbrückung des axialen Abstands gegeneinander aufzuschieben. Das Aufschieben bewirkt eine Trennung der zumindest zwei Kontaktbereiche und damit eine detektierbare Änderung der Schaltstellung des Schalters.

Dabei sollte der axiale Abstand der Anlageflächen zueinander kleiner als die erste Erstreckung und größer als die zweite Erstreckung der Kontaktbereiche sein. Auch bei der Detektion von in das Fahrwerkbauteil eingeleiteten Druckkräften lassen sich durch die Dimensionierung der zweiten Erstreckung des Kontaktbereiches der Schaltelemente und des axialen Abstands zwischen den Anlageflächen der Schaltelemente zwei Belastungsgrenzwerte für Druckkräfte festlegen. Das Passieren eines ersten Belastungsgrenzwertes infolge der Druckkraftbeaufschlagung führt dazu, dass beim aufeinander zubewegen der Schaltelemente zunächst nur die Kontaktbereiche mit der zweiten Erstreckung voneinander getrennt werden, es jedoch wegen des grö-ßeren axialen Abstandes zwischen den Anlageflächen noch nicht zu einem Aufschieben an den Anlageflächen kommt. Erst mit dem Passieren eines zweiten Belastungsgrenzwertes, der höher als der erste Belastungsgrenzwert ist, führen die in das Fahrwerkbauteil eingeleiteten Druckkräfte dazu, dass es zu einem Aufschieben der Anlageflächen gegeneinander kommt, so dass zusätzlich auch die Kontaktbereiche mit der ersten, größeren Erstreckung voneinander getrennt werden. Dadurch befindet sich der Schalter in seiner vollständig geöffneten Schaltstellung.

Gemäß einer alternativen Ausführungsform des erfindungsgemäßen Schalters kann das jeweilige Lasteinleitungselement durch ein stabförmiges, elektrisch leitend ausgeführtes Verbindungselement mit einem der Lasteinleitungsbereiche verbunden sein und die parallel zueinander angeordneten Lasteinleitungselemente können durch die miteinander korrespondierenden Schaltelemente elektrisch leitend miteinander verbindbar sein. Dabei sind die parallel zueinander angeordneten Lasteinleitungselemente senkrecht zur Längsachse der Verbindungselemente angeordnet.

Hierzu können die miteinander korrespondierenden Schaltelemente an ihren freien Enden jeweils einander zugewandt angeordnete elektrisch leitende Anlageflächen aufweisen, durch die miteinander korrespondierenden Schaltelemente in geschlossener Schaltstellung leitend verbunden sind.

Bevorzugt kann der Schalter aus einem spritzgussfähigen oder 3D-druckfähigen Kunststoff bestehen. Vorzugsweise kann als spritzgussfähiger Kunststoff Polyamid oder Polypropylen verwendet werden. Auf diese Weise kann der Schalter kostengünstig in hoher Stückzahl gefertigt werden. Alternativ kann der Schalter auch mittels eines 3D-Druck-Verfahrens hergestellt werden.

Weiterhin können die Anlageflächen unterschiedliche Erstreckungen aufweisen. Die durch eine Zugkraft hervorgerufene Relativbewegung der Lasteinleitungselemente führt in Abhängigkeit von der Größenordnung der Zugkraft zu einer zunehmenden Beabstandung der miteinander korrespondierenden Schaltelemente. Um bei dieser Ausführungsform unterschiedliche Belastungsgrenzen für die in das Fahrwerkbauteil eingeleiteten Zugkräfte zu definieren, weisen die Anlageflächen an den freien Enden der der miteinander korrespondierenden Schaltelemente unterschiedliche Erstreckungen auf, welche die Länge des Überlappungsbereiches bestimmen, innerhalb dessen die Schaltelemente elektrisch leitend verbunden sind. Dadurch lassen sich ebenfalls zumindest zwei unterschiedliche Belastungsgrenzwerte für Zugkräfte definieren, die bei entsprechender Zugkraft eine Relativbewegung hervorgerufene, die dazu führt, dass das Paar miteinander korrespondierenden Schaltelemente mit einer kürzeren Erstreckung ihrer Anlageflächen in eine geöffnete Schaltstellung überführt wird, während das Paar miteinander korrespondierenden Schaltelemente mit der grö-ßeren Erstreckung ihrer Anlageflächen noch in der geschlossenen Schaltstellung verbleibt. Nehmen die Zugkräfte weiter zu, d.h. überschreitet die Relativbewegung der Lasteinleitungselemente einen der größeren Erstreckung entsprechenden Abstand, wird auch dieses Paar miteinander korrespondierender Schaltelemente in die geöffnete Schaltstellung überführt, wodurch der Schalter vollständig geöffnet ist.

Des Weiteren kann zumindest ein weiteres Paar miteinander korrespondierender Schaltelemente zur Detektion einer über die Lasteinleitungsbereiche eingeleiteten Druckkraft aus einer geöffneten Schaltstellung in eine geschlossene Schaltstellung überführbar sein.

Insbesondere kann jedes Schaltelement der Lasteinleitungselemente durch eine separate Leitung mit der Schaltung verbunden sein. Dadurch lassen sich die verschiedenen Kombinationen von Schaltstellungen, die insbesondere bei zwei oder mehr vorgebbaren Belastungsgrenzen eintreten können, durch ein Steuergerät des Kraftfahrzeugs erfassen und auswerten.

Weiterhin wird zur Lösung der eingangs genannten Aufgabe die Verwendung eines Sensors zur Detektion einer mechanischen Belastung an einem Fahrwerkbauteil für ein Kraftfahrzeug vorgeschlagen, wobei das Fahrwerkbauteil zumindest zwei Lasteinleitungsbereiche, die durch einen Verbindungsabschnitt miteinander verbunden sind, umfasst, wobei der zumindest eine Sensor als ein Schalter einer elektrischen Schaltung ausgeführt ist, mit zumindest zwei Lasteinleitungselementen, an denen jeweils zumindest ein Schaltelement angeordnet ist, die in eine offene Schaltstellung und eine geschlossene Schaltstellung überführbar sind, wobei jeweils ein Lasteinleitungselement mit einem der Lasteinleitungsbereiche verbunden ist, durch welche eine in axialer Richtung des Verbindungsabschnittes wirkende Belastung auf das jeweilige Lasteinleitungselement übertragen wird, wobei eine Überschreitung eines Belastungsgrenzwertes durch eine von den zumindest zwei Lasteinleitungselementen aufgenommene Belastung eine Änderung einer Schaltstellung zumindest zweier miteinander korrespondierender Schaltelemente bewirkt.

Vorteilhafte Ausführungsformen der Erfindung, die nachfolgend erläutert wird, sind in den Zeichnungen dargestellt. Es zeigt:
- Fig. 1: in einer perspektivischen Ansicht von schräg oben einen Teil eines Fahrwerks mit einem als Achsstrebe ausgebildeten Fahrwerkbauteil;
- Fig. 2: eine schematische Ansicht des als Achsstrebe ausgeführten Fahrwerkbauteils mit einem daran angeordneten Sensor;
- Fig. 3: eine Teilansicht des als Schalter ausgeführten Sensors in geschlossener Schaltstellung;
- Fig. 4: eine Detailansicht X des Schalters gemäß Fig. 3;
- Fig. 5: eine exemplarische und schematische Darstellung einer elektrischen Schaltung, in welche der als Schalter ausgeführte Sensor eingebunden ist;
- Fig. 6: eine schematische Darstellung eines als Schalter ausgeführten Sensors gemäß einer zweiten Ausführungsform;
- Fig. 7: eine schematische Darstellung des Schalters gemäß Fig. 6 in einer wegen einer Zugbelastung vollständig geöffneten Schaltstellung;
- Fig. 8: eine schematische Darstellung des Schalters gemäß Fig. 6 in einer wegen einer Druckbelastung vollständig geschlossenen Schaltstellung;
- Fig. 9: eine schematische Darstellung des Schalters gemäß Fig. 6 in einer wegen einer Biegebelastung teilweise geschlossenen Schaltstellung;
- Fig. 10: eine schematische Ansicht des als Achsstrebe ausgeführten Fahrwerkbauteils mit einem daran angeordneten Schalter gemäß einer dritten Ausführungsform; und
- Fig. 11: eine schematische Darstellung des Schalters gemäß Fig. 10.

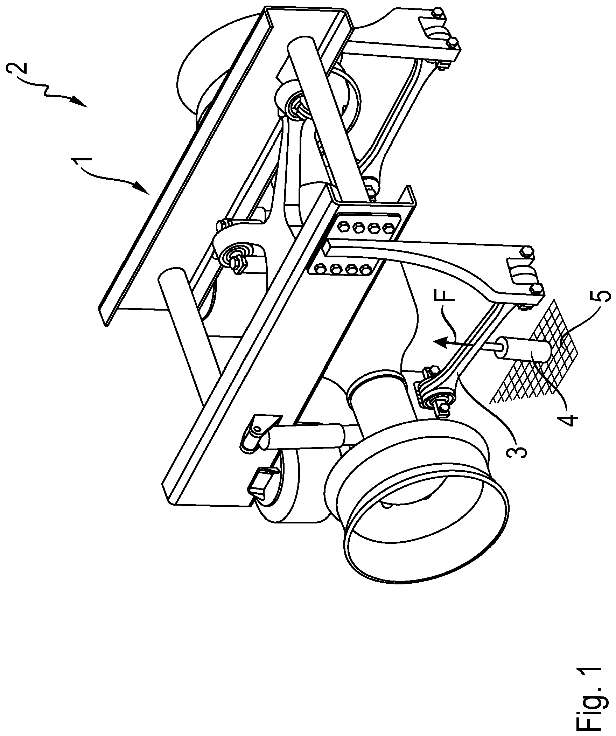

In Fig. 1 ist beispielhaft ein Teil eines Fahrwerks 1 eines Kraftfahrzeugs 2 dargestellt, wobei das Kraftfahrzeug 2 beispielhaft als ein Lastkraftwagen ausgebildet ist. Das Kraftfahrzeug kann auch als Personenkraftwagen ausgeführt sein. Das Fahrwerk 1 weist ein als Achsstrebe ausgebildetes, insbesondere faserverstärktes, Fahrwerkbauteil 3 auf. Das Fahrwerkbauteil 3 kann auch aus einem metallischen Werkstoff bestehen. Ein Wagenheber 4, der sich auf einem als Parkplatzfläche 5 ausgebildeten Untergrund abstützt, drückt gegen die Unterseite des für ein seitliches Anheben des Fahrwerks 1 nicht vorgesehenes und auch nicht ausgelegtes Fahrwerkbauteils 3. Dabei wird das Fahrwerkbauteil 3 mit einer Kraft F beaufschlagt, die zu einer Schädigung des Fahrwerkbauteils 3 führt, derart, dass eine Weiterfahrt des Kraftfahrzeugs 2 ein Sicherheitsrisiko darstellen kann. Neben diesem beispielhaft genannten Missbrauchsfall wirken im laufenden Betrieb des Kraftfahrzeugs 2 neben Biegebelastungen zudem Zug- und Druckkräfte auf das Fahrwerk 1 und seine Fahrwerkbauteile 3 ein, die während der Nutzungsdauer des Kraftfahrzeugs 2 zu einer Degradierung der Fahrwerkbauteile 3 führen. Diesen Umständen wird durch die konstruktive Dimensionierung des Fahrwerkbauteils 3 Rechnung getragen, indem Fahrwerkbauteile 3 überdimensioniert ausgeführt werden. Dies läuft insbesondere dem Leichtbaugedanken zuwider, welcher der Ausgestaltung von Fahrwerkbauteilen als faserverstärkte Fahrwerkbauteile 3 zugrunde liegt.

Zur Vermeidung einer Überdimensionierung des Fahrwerkbauteils 3, bei gleichzeitiger Gewährleistung der Stabilität und Sicherheit des Fahrwerkbauteils 3 im laufenden Betrieb, ist es notwendig, das Auftreten von mechanischen Belastungen detektieren und auswerten zu können. Anhand der Auswertung der im Betrieb aufgetretenen Belastungen lässt sich auf die zu erwartende Lebensdauer des Fahrwerkbauteils 3 schließen. So kann in dem Steuergerät beispielsweise eine Zählschleife hinterlegt werden, welche die Anzahl der Lastüberschreitungen im Sinne eines Lebensdauerzählers detektiert, um dann gegebenenfalls bei Überschreiten eines Zählerschwellwertes eine Weiterfahrt zu unterbinden. Ebenso lässt sich eine die Betriebssicherheit gefährdende Überbelastung detektieren, um daraus geeignete Maßnahmen ableiten zu können.

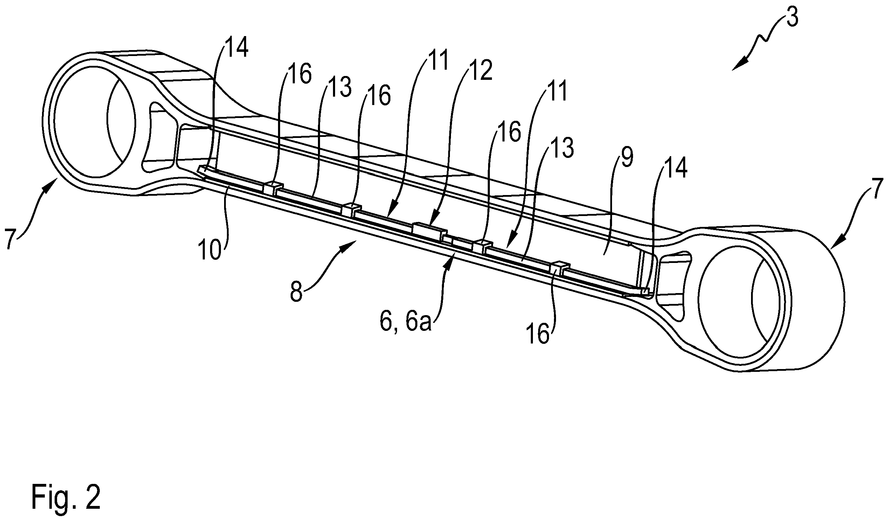

Um das Auftreten von insbesondere in axialer Richtung des Fahrwerkbauteils 3 wirkenden mechanischen Belastungen an dem faserverstärktes Fahrwerkbauteil 3 des Kraftfahrzeug 2 zu detektieren, ist an dem Fahrwerkbauteil 3 zumindest ein Sensor 6 zur Detektion mechanischer Belastung angeordnet, wie in Fig. 2 dargestellt ist.

Die Darstellung in Fig. 2 zeigt eine schematische Ansicht eines als Achsstrebe ausgeführten Fahrwerkbauteils 3 mit einem daran angeordneten Sensor 6. Das als Achsstrebe ausgeführte Fahrwerkbauteil 3 umfasst zwei Lasteinleitungsbereiche 7, die durch einen länglichen Verbindungsabschnitt 8 miteinander verbunden sind. Die Lasteinleitungsbereiche 7 dienen jeweils der Aufnahme zumindest eines Lagerbauteils. Der Verbindungsabschnitt 8 weist ein Tragprofil 9 auf. Das Tragprofil 9 kann einen Doppel-H-förmigen Querschnitt aufweisen, so dass sich auf beiden Seiten des Tragprofils 9 freiliegende Randbereiche 10 ausbilden, in denen zumindest ein Sensor 6 angeordnet ist. Das Tragprofil 9 kann auch andere Querschnittsformen aufweisen, wobei das Tragprofil 9 als offenes Profil und/oder Hohlprofil ausgeführt sein kann.

Der zumindest eine Sensor 6 ist als ein Schalter 6a einer elektrischen Schaltung 20 ausgeführt. Der Schalter 6a weist zumindest zwei Lasteinleitungselemente 11 auf, an denen jeweils zumindest ein Schaltelement 12 angeordnet ist, die in einer geschlossenen Schaltstellung einander berühren und in geöffneter Schaltstellung zueinander beabstandet sind. Das jeweilige Lasteinleitungselement 11 ist mit einem der Lasteinleitungsbereiche 7 verbunden, durch welche eine in axialer Richtung des Verbindungsabschnittes 8 wirkende Belastung, d.h. eine Zugbelastung und/oder eine Druckbelastung, auf das jeweilige Lasteinleitungselement 11 übertragbar ist.

Das jeweilige Lasteinleitungselement 11 ist als ein stabförmiges Bauteil 13 ausgeführt, welches mit einem Ende 14 mit einem der Lasteinleitungsbereiche 7 verbunden ist und mit seinem freien Ende 15 dem gegenüberliegenden Lasteinleitungsbereich 7 zugewandt sich in axialer Richtung des Verbindungsabschnittes 8 erstreckt. Gegenüber dem Verbindungsabschnitt 8 ist das stabförmige Bauteil 13 relativbeweglich angeordnet. Der jeweilige als stabförmiges Bauteil 13 ausgeführte Lasteinleitungselement 11 ist elektrisch leitend ausgeführt. Hierzu sind Befestigungselemente 16 an dem Verbindungsabschnitt 8 angeordnet, welche ein Ausknicken des jeweiligen als stabförmiges Bauteil 13 ausgeführten Lasteinleitungselementes 11 verhindern. Die relativbewegliche Anordnung der beiden Lasteinleitungselemente 11 ermöglicht es, in axialer Richtung des Verbindungsabschnitts 8 wirkende Kräfte, d.h. Zugkräfte und/oder Druckkräfte, angedeutet durch Doppelpfeile F, die über die Lasteinleitungsbereiche 7 eingeleitet werden, zu detektieren, wenn es aufgrund der eingeleiteten Kräfte zu einer Relativbewegung der Lasteinleitungselementes 11 und damit einhergehend zu einer Änderung der Schaltstellung des Schalters 6a kommt.

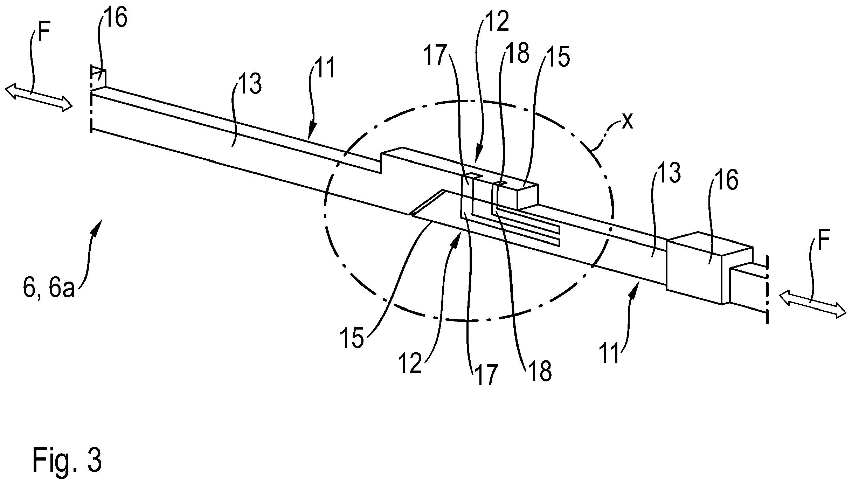

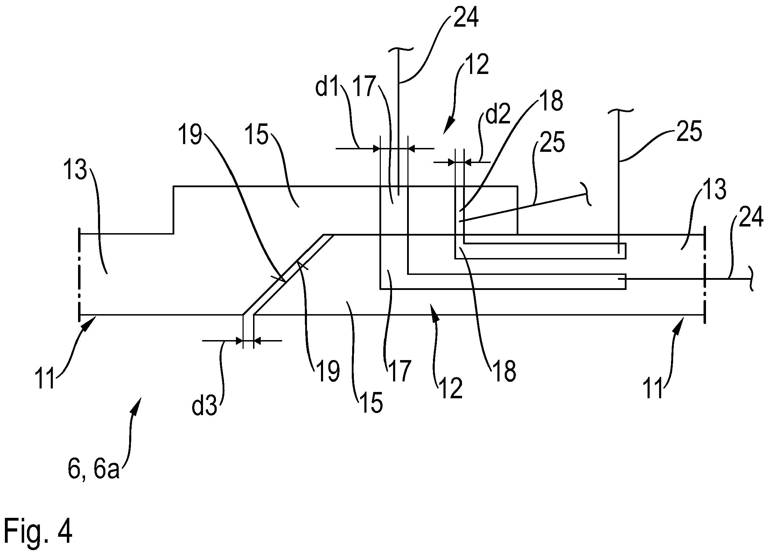

In Fig. 3 ist eine Teilansicht des als Schalter ausgeführten Sensors in geschlossener Schaltstellung dargestellt. Fig. 4 zeigt eine Darstellung einer Detailansicht X des Schalters gemäß Fig. 3. Die Schaltelemente 12 sind an einander in axialer Richtung überlappenden Abschnitten an den freien Enden 15 der einander gegenüberliegend angeordneten Lasteinleitungselemente 11 als elektrisch leitende Kontaktbereiche 17, 18 ausgebildet, die in geschlossener Schaltstellung einander berühren. Bevorzugt sind an den freien Enden 15 jeweils zwei elektrisch leitende Kontaktbereiche 17, 18 angeordnet, wobei der Kontaktbereich 17 mit einer ersten Erstreckung d1 und der Kontaktbereich 18 mit einer zweiten Erstreckung d2 in axialer Richtung des Bauteils 13 ausgeführt ist. Dabei ist die erste Erstreckung d1 des Kontaktbereichs 17 größer als die zweite Erstreckung d2 des Kontaktbereichs 18 gewählt. Die Kontaktbereich 17 sind durch Leitungen 24 und die Kontaktbereich 18 durch Leitungen 25 mit der Schaltung 20 verbunden.

Die freien Enden 15 der einander gegenüberliegend angeordneten Lasteinleitungselemente 11 weisen komplementäre, rampenförmige Anlageflächen 19 auf, die in geschlossener Schaltstellung des Schalters 6 einen axialen Abstand d3 zueinander aufweisen. Die rampenförmigen Anlageflächen 19 sind an den Stirnflächen der freien Enden 15 ausgebildet. Der axiale Abstand d3 der Anlageflächen 19 zueinander ist kleiner als die erste Erstreckung d1 und größer als die zweite Erstreckung d2 der jeweiligen Kontaktbereiche 17, 18.

Die stabförmigen Bauteile 13 des Sensors 6 nehmen nahezu keine Kräfte auf und können somit aus einem kostengünstigen, spritzgussfähigen Kunststoff herstellbar sein, beispielsweise Polypropylen oder Polyamid. Die elektrisch leitenden Kontaktbereiche 17, 18 können nachträglich in die freien Enden 15 der Lasteinleitungselemente 11 eingebracht werden. Alternativ können die elektrisch leitenden Kontaktbereiche 17, 18 während des Herstellungsprozesses der Lasteinleitungselemente 11 abschnittsweise mit Kunststoff umspritzt werden. Alternativ ist die Herstellung auch mittels eines 3D-Druck-Verfahrens möglich.

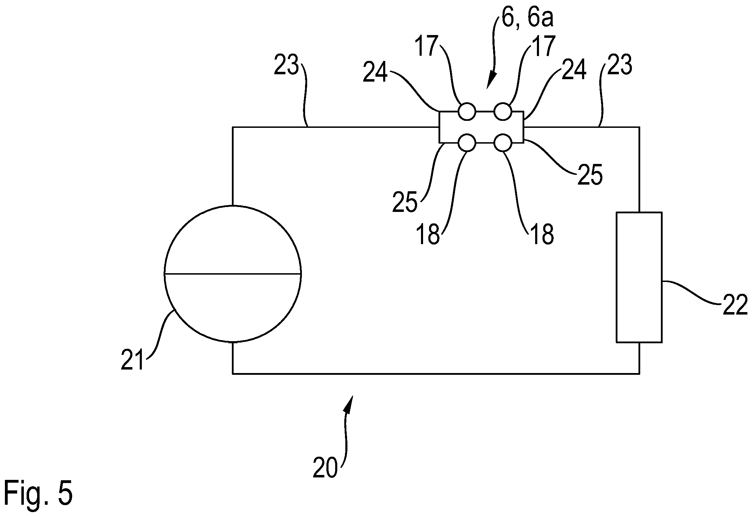

In Fig. 5 ist eine schematische, stark vereinfachte Darstellung einer elektrischen Schaltung 20 gezeigt, in welche der als Schalter 6a ausgeführte Sensor 6 eingebunden ist. Die Schaltung 20 umfasst eine Stromquelle 21 die durch Leitungen 23 mit einem zumindest einem Verbraucher 22 verbunden ist. Die Verbindung zwischen der Stromquelle 21 und dem Verbraucher 22 ist durch den Schalter 6a unterbrechbar. Der Verbraucher 22 kann beispielsweise als eine Signalleuchte und/oder als ein Steuergerät des Kraftfahrzeugs ausgeführt sein.

Die Darstellung in Fig. 5 zeigt den Schalter 6a in seiner geschlossenen Schaltstellung, was mit der Darstellung des Schalters 6a in Fig. 3 korrespondiert. Dabei kann die Stromquelle 21 als eine externe, am Fahrzeug angeordnete, Stromquelle ausgeführt sein. Alternativ kann die Stromquelle 21 als eine in das Fahrwerkbauteil 3 integrierte Stromquelle ausgeführt sein. Insbesondere bei einer in das Fahrwerkbauteil 3 integrierten Stromquelle kann diese als sogenanntes Energy Harvesting Modul ausgeführt sein. Aus der Darstellung ist ersichtlich, dass der für Realisierung der Überwachung notwendige Aufwand an Bauteilen auf ein Minimum begrenzt ist.

Der Schalter 6a ist derart ausgeführt, dass sich die zwei korrespondierend angeordneten Schaltelemente 12 bei einer unterhalb eines Belastungsgrenzwertes liegenden mechanischen Belastung des Fahrwerkbauteils 3 in der geschlossenen Schaltstellung befinden. In dieser geschlossenen Schaltstellung stehen beide Kontaktbereiche 17, 18 der Schaltelemente 12 miteinander in Berührung, so dass durch beide Leitungen 24, 25 Strom gleicher Stromstärke fließt.

Eine als Zugkraft auf das Fahrwerkbauteil 3 aufgeprägte Kraft F führt dazu, dass eine Relativbewegung der beiden Lasteinleitungselemente 11 hervorgerufen wird, welche das jeweilige Schaltelement 12 axial in Richtung des Lasteinleitungsbereiches 7 verschiebt, mit welchem das Lasteinleitungselement 11 verbunden ist. Durch die Dimensionierung der Erstreckung d1, d2 der Kontaktbereiche 17, 18 der Schaltelemente 12 lassen sich zwei Belastungsgrenzwerte für Zugkräfte festlegen. Das Passieren eines ersten Belastungsgrenzwertes infolge der Zugkraftbeaufschlagung führt dazu, dass zunächst nur die Kontaktbereiche 18 voneinander getrennt werden. Somit fließt der gesamte Strom über die Kontaktbereiche 17 ab. Diese Änderung der Stromstärke lässt sich entsprechend detektieren und auswerten.

Das Passieren eines zweiten Belastungsgrenzwertes, der höher als der erste Belastungsgrenzwert ist, führt dazu, dass zusätzlich auch die Kontaktbereiche 17 voneinander getrennt werden. Dadurch befindet sich der Schalter 6a in seiner geöffneten Schaltstellung.

Wird als Kraft F hingegen eine Druckkraft auf das Fahrwerkbauteil 3 aufgeprägt, so wird eine Relativbewegung der beiden Lasteinleitungselemente 11 hervorgerufen, welche die Schaltelemente 12 axial in Richtung des jeweils gegenüberliegenden Lasteinleitungsbereiches 7, d.h. aufeinander zu, verschiebt. Dadurch bewegen sich die rampenförmigen Anlageflächen 19 aufeinander zu und beginnen sich nach Überbrückung des axialen Abstands d3 gegeneinander aufzuschieben. Das Aufschieben bewirkt eine Trennung der beiden Kontaktbereiche 17 und 18 voneinander.

Auch bei der Detektion von in das Fahrwerkbauteil eingeleiteten Druckkräften lassen sich durch die Dimensionierung der Erstreckung d2 des Kontaktbereiches 18 der Schaltelemente 12 und des axialen Abstands d3 zwischen den Anlageflächen 19 der Schaltelemente 12 zwei Belastungsgrenzwerte für Druckkräfte festlegen. Das Passieren eines ersten Belastungsgrenzwertes infolge der Druckkraftbeaufschlagung führt dazu, dass beim aufeinander zubewegen der Schaltelemente 12 zunächst nur die Kontaktbereich 18 voneinander getrennt werden, es jedoch wegen des größeren axialen Abstandes d3 zwischen den Anlageflächen 19 nicht zu einem Aufschieben an den Anlageflächen 19 kommt. Somit fließt der gesamte Strom über die weiterhin miteinander in Verbindung stehenden Kontaktbereiche 17 ab. Diese Änderung der Stromstärke lässt sich entsprechend detektieren und auswerten.

Das Passieren eines zweiten Belastungsgrenzwertes aufgrund der aufgenommenen Druckkraft, der höher als der erste Belastungsgrenzwert ist, führt dazu, dass es zum Aufschieben der Anlageflächen 19 gegeneinander kommt, so dass zusätzlich auch die Kontaktbereiche 17 voneinander getrennt werden. Dadurch befindet sich der Schalter 6a in seiner geöffneten Schaltstellung.

Durch eine Variation der Erstreckung d1, d2 der Kontaktbereiche 17, 18 sowie der Erstreckung d2 und des axialen Abstandes d3 können so Überschreitungen unterschiedlichster Kraftlimits respektive Belastungsgrenzwerte in Zug- und Druckrichtung detektiert werden.

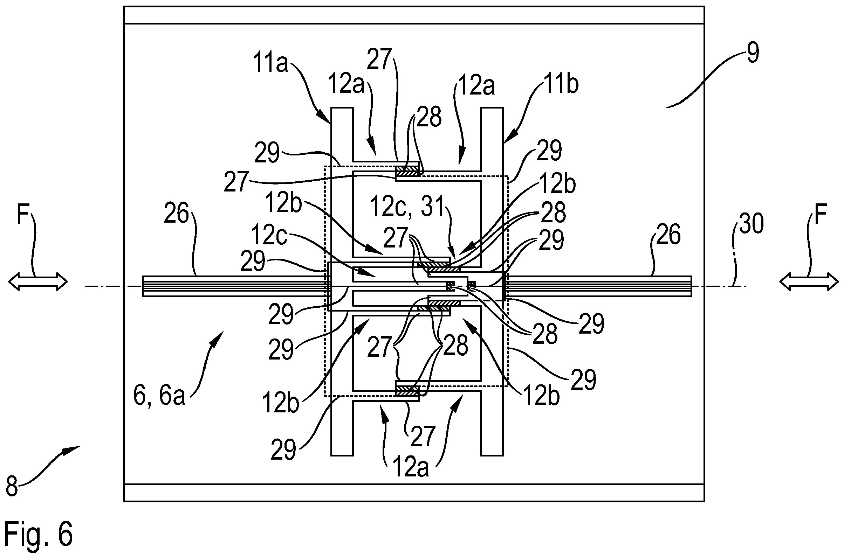

Fig. 6 zeigt eine schematische Darstellung eines als Schalter 6b ausgeführten Sensors 6 gemäß einer zweiten Ausführungsform. Auch dieser Schalter 6b nimmt nahezu keine Kräfte auf und kann somit aus einem kostengünstigen, spritzgussfähigen Kunststoff herstellbar sein, beispielsweise Polypropylen oder Polyamid. Alternativ ist die Herstellung des Sensors 6 auch mittels eines 3D-Druck-Verfahrens möglich. Zwei parallel und mit Abstand zueinander angeordnete Lasteinleitungselemente 11a, 11b des Schalters 6b sind durch jeweils ein stabförmiges Verbindungselement 26 mit einem der Lasteinleitungsbereiche 7 des Fahrwerkbauteils 3 verbunden. Gegenüber dem Verbindungsabschnitt 8 des Fahrwerkbauteils 3 sind die Verbindungselemente 26 und die Lasteinleitungselemente 11a, 11b relativbeweglich angeordnet. Die Verbindungselemente 26 sind parallel zum Verbindungsabschnitt 8 verlaufend angeordnet.

An den beiden Lasteinleitungselementen 11a, 11b sind an ihren einander zugewandten Oberflächen mehrere Schaltelemente 12a, 12b paarweise einander gegenüberliegend mit sich abschnittsweise überlappenden Anlageflächen 28 angeordnet. Das Lasteinleitungselement 11a weist ein zusätzliches Schaltelement 12c auf. Die im Wesentlichen stegförmig ausgebildeten Schaltelemente 12a, 12b, 12c sind mit einem Ende an dem jeweiligen Lasteinleitungselement 11a, 11b angeordnet. Dabei erstrecken sich die jeweiligen Schaltelemente 12a, 12b, 12c senkrecht zur Oberfläche der Lasteinleitungselement 11, 11b. Die einander gegenüberliegend angeordneten Schaltelemente 12a, 12b, 12c können an ihren freien Enden 27, in Abhängigkeit von einem Auftreten einer Relativbewegung infolge einer mechanischen Belastung des Fahrwerkbauteils 3, durch Berührung in Kontakt miteinander stehen. Die einzelnen Paare von Schaltelementen 12a, 12b, 12c können entsprechend ihrer parallelen Anordnung in die in Fig. 5 stark vereinfacht und beispielhaft dargestellte elektrische Schaltung 20 eingebunden sein. Jedes der Schaltelement 12a, 12b, 12c ist durch eine separate elektrische Leitung 29 mit der elektrischen Schaltung 20 verbunden.

Hierzu kann die der Anzahl der Schaltelemente 12a, 12b, 12c entsprechende Anzahl an elektrischen Leitungen 29 in den Verbindungselementen 26 angeordnet sein. Durch den einer Parallelschaltung entsprechenden Aufbau fließt durch alle in Kontakt miteinander stehenden Paare der Schaltelemente 12a, 12b, 12c jeweils ein Strom gleicher Stromstärke. Die Schaltelemente 12a, 12b, 12c sind im Bereich ihrer einander zugewandten Anlageflächen 28 an den freien Enden 27 mit einem elektrisch leitfähigen Material versehen. Die Anlageflächen 28 bilden elektrisch leitende Kontaktabschnitte des Schalters 6b, die unmittelbar miteinander in Kontakt stehen können.

Das jeweilige Lasteinleitungselement 11a, 11b ist bezüglich der Anordnung der Schaltelemente 12a, 12b, 12c an diesen symmetrisch ausgeführt. An dem Lasteinleitungselement 11a sind bezogen auf eine Längsachse 30 des Verbindungselementes 26 fünf Schaltelemente 12a, 12b, 12c achsparallel angeordnet. Das Schaltelement 12c ist fluchtend zur Längsachse 30 angeordnet, die weiteren Schaltelement 12a und 12b sind äquidistant zu diesem an der Oberfläche des Lasteinleitungselementes 11a angeordnet. An dem Lasteinleitungselement 11b sind bezogen auf die Längsachse 30 des Verbindungselementes 26 vier Schaltelemente 12a, 12b achsparallel zueinander angeordnet. Zwei unmittelbar benachbart zur Längsachse 30 angeordnete Schaltelemente 12b bilden zwischen sich eine im Wesentlichen gabelförmige Aufnahme 31 für das an dem Lasteinleitungselement 11 angeordnete Schaltelement 12c aus. Am Boden der Aufnahme 31, die das korrespondierende Schaltelement 12c des Lasteinleitungselementes 11b bildet, befindet sich die elektrisch leitende Anlagefläche 28 als Gegenstück zu dem Schaltelement 12c des Lasteinleitungselementes 11a. Die Abstände zwischen den Schaltelementen 12a, 12b, 12c des Lasteinleitungselementes 11a und den Schaltelementen 12a, 12b des Lasteinleitungselementes 11b sind derart gewählt, dass das Lasteinleitungselement 11b wie ein Stecker in das Lasteinleitungselement 11a einführbar ist.

Die in Fig. 6 dargestellte Schaltstellung des Schalters 6b entspricht einer Belastungssituation des Fahrwerkbauteils 3, in welcher die durch die Lasteinleitungsbereiche aufgenommen Kräfte F unterhalb einer Belastungsgrenze liegen, die zu einer Änderung der Schaltstellung von zumindest zwei miteinander korrespondierenden Schaltelementen 12a, 12b bewirkt führt. Die jeweiligen miteinander korrespondierenden Schaltelemente 12a und 12b berühren einander, so dass der Stromkreis geschlossen ist. Das fluchtend zur Längsachse 30 angeordnete Schaltelemente 12c ist beabstandet zur Anlagefläche 28 am Grund der Aufnahme 31 positioniert, so dass es sich in geöffneter Schaltstellung befindet.

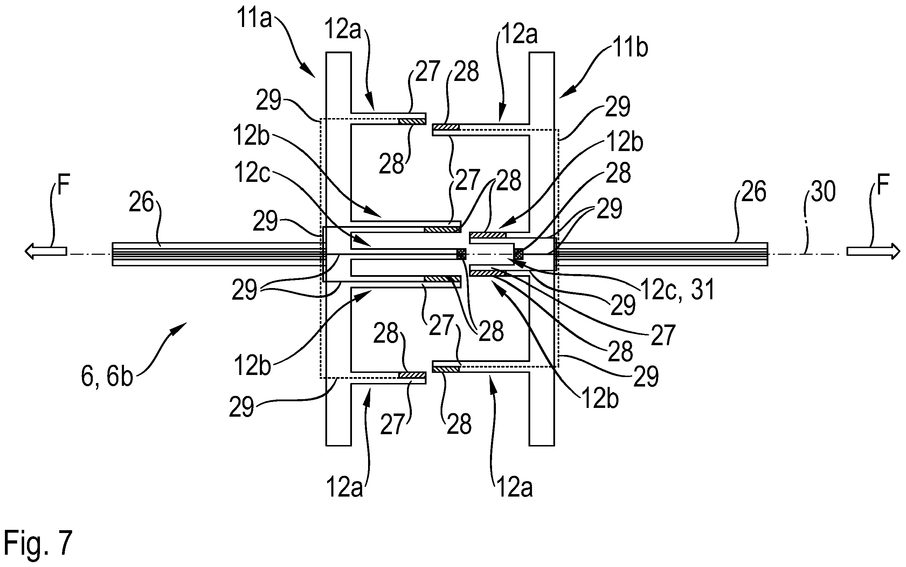

In Fig. 7 ist eine schematische Darstellung des Schalters 6b gemäß Fig. 6 in einer wegen einer die Belastungsgrenze überschreitenden Zugbelastung vollständig geöffneten Schaltstellung aller miteinander korrespondierenden Schaltelemente 12a, 12b, 12c gezeigt. Die als Zugkraft wirkende Kraft F ruft eine Relativbewegung der Lasteinleitungselemente 11a, 11b hervor, die zu einer zunehmenden axialen Beabstandung zueinander führt. Die Belastungsgrenze für die Zugkraft lässt sich durch die Erstreckung des Überlappungsbereichs zwischen den Anlageflächen 28 der miteinander korrespondierenden Schaltelemente 12a, 12b festlegen. Führt die Relativbewegung der Lasteinleitungselemente 11a, 11b dazu, dass die Anlageflächen 28 zumindest der äußeren Schaltelemente 12a einander nicht mehr berühren, fließt über die Schaltelemente 12a kein Strom. Dabei kann die in Fig. 7 dargestellt Schaltstellung des Schalters 6b respektive aller miteinander korrespondierenden Schaltelemente 12a, 12b, 12c eintreten, dass kein Strom fließt, da der Schalter 6b vollständig geöffnet ist. Diese Unterbrechung kann als Signal für eine Überlastung des Fahrwerkbauteils 3 aufgrund von Zugkräften ausgewertet werden. Denkbar ist aber auch, dass die Schaltelemente 12b noch miteinander in Kontakt stehen können, so dass in diesem die messbare Stromstärke entsprechend höher ist, was ebenfalls als Signal für eine Überlastung des Fahrwerkbauteils 3 aufgrund von Zugkräften ausgewertet werden kann.

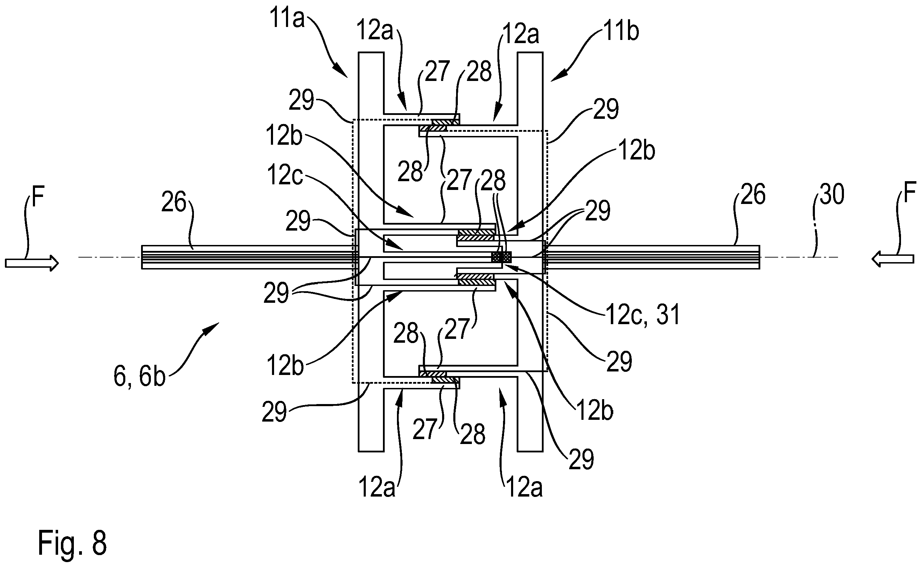

Fig. 8 zeigt eine schematische Darstellung des Schalters 6b gemäß Fig. 6 in einer wegen einer den Belastungsgrenzwert überschreitenden Druckbelastung vollständig geschlossenen Schaltstellung aller miteinander korrespondierenden Schaltelemente 12, 12b, 12c. Die als Druckkraft wirkende Kraft F ruft eine Relativbewegung der Lasteinleitungselemente 11a, 11b hervor, die zu einer abnehmenden axialen Beabstandung zueinander führt. Der Belastungsgrenzwert für die Druckkraft lässt sich durch den Abstand der stirnseitigen Anlageflächen 28 der miteinander korrespondierenden Schaltelemente 12c zueinander festlegen. Führt die Relativbewegung der Lasteinleitungselemente 11a, 11b dazu, dass die Anlageflächen 28 der Schaltelemente 12c einander berühren, fließt über alle Schaltelemente 12a, 12b, 12c ein Strom. Die daraus resultierende Änderung der Stromstärke lässt sich detektieren und auswerten.

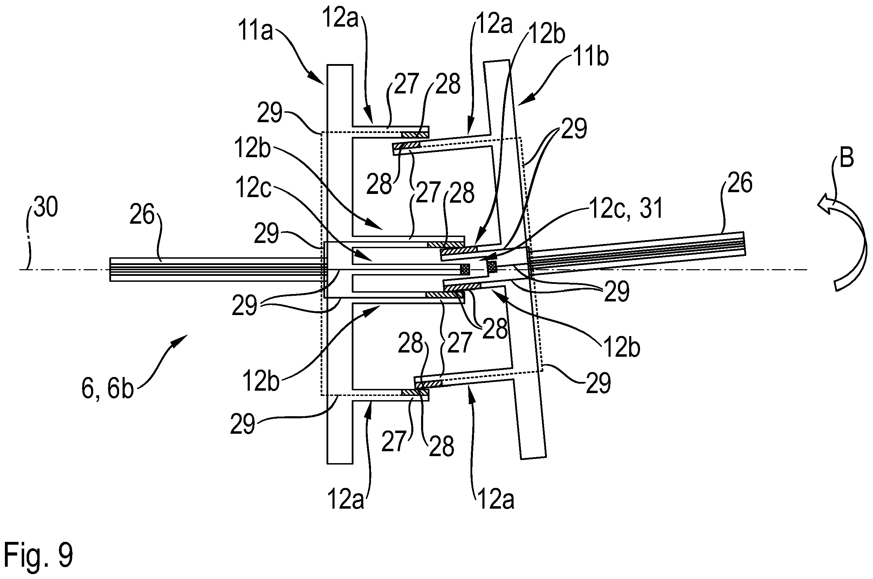

In Fig. 9 ist eine schematische Darstellung des Schalters 6b gemäß Fig. 6 in einer wegen einer Biegebelastung teilweise geschlossenen Schaltstellung von miteinander korrespondierenden Schaltelementen 12a, 12b, 12c dargestellt. Der Schalter 6b bietet zusätzlich die Möglichkeit, Biegebelastungen B zu detektieren und bei Überschreiten eines Belastungsgrenzwertes für die Biegebelastung B anzusprechen. Das Einleiten einer Biegebelastung B führt zu einer Auslenkung eines der Lasteinleitungselemente 11a, 11b relativ zur Längsachse 30, im dargestellten Ausführungsbeispiel zur Auslenkung des Lasteinleitungselementes 11b. Beim Überschreiten des Belastungsgrenzwertes für die Biegebelastung B wird ein Paar der äußeren Schaltelemente 12a in eine geöffnete Schaltstellung überführt, während die Paare der Schaltelemente 12b sowie das andere Paar der äußeren Schaltelemente 12a sich in geschlossener Schaltstellung befinden. Die daraus folgende Änderung der Stromstärke lässt sich entsprechend auswerten.

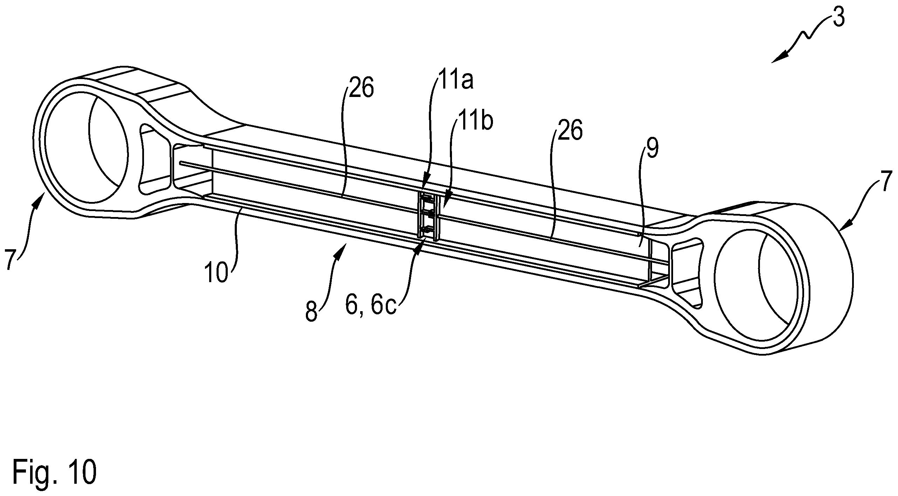

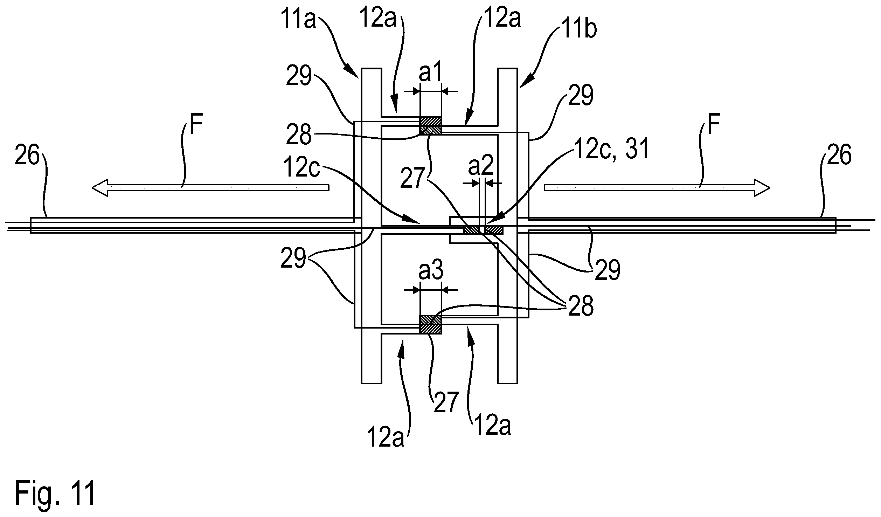

In Fig. 10 ist eine schematische Ansicht des als Achsstrebe ausgeführten Fahrwerkbauteils 3 mit einem daran angeordneten Schalter 6c gemäß einer dritten Ausführungsform dargestellt. Fig. 11 zeigt eine schematische Darstellung des Schalters 6c gemäß Fig. 10. Die dritte Ausführungsform ist eine vereinfachte Ausführung des Schalters 6b, der weiter oben detailliert beschrieben wurde. Für funktionsgleiche Bauteile werden nachfolgend die gleichen Bezugszeichen verwendet. Der Unterschied zwischen der zweiten und dritten Ausführungsform besteht darin, dass der Schalter 6c lediglich zur Detektion von in axialer Richtung des Fahrwerkbauteils 3 über die Lasteinleitungsbereiche 7 eingeleitete Kräfte eingerichtet ist.

Die miteinander korrespondierenden äußeren Schaltelemente 12a der Lasteinleitungselemente 11a, 11b können mit den elektrisch leitend ausgeführten Anlageflächen 28 an ihren freien Enden 27 miteinander in Berührung stehen. Die durch eine Zugkraft hervorgerufene Relativbewegung der Lasteinleitungselemente 11a, 11b führt in Abhängigkeit von der Größenordnung der Zugkraft zu einer zunehmenden Beabstandung der miteinander korrespondierenden Schaltelemente 12a. Um unterschiedliche Belastungsgrenzen für in das Fahrwerkbauteil 3 eingeleitete Zugkräfte zu definieren, weisen die Anlageflächen 28 an den freien Enden 27 der der miteinander korrespondierenden Schaltelemente 12a unterschiedliche Erstreckungen a1, a3 auf, welche die Länge des Überlappungsbereiches bestimmen. Im dargestellten Ausführungsbeispiel ist die Erstreckung a1 kleiner als die Erstreckung a3. Dadurch lassen sich zwei unterschiedliche Belastungsgrenzen für Zugkräfte definieren, da bei entsprechender Zugkraft die hervorgerufene Relativbewegung dazu führt, dass das Paar miteinander korrespondierenden Schaltelemente 12a mit der Erstreckung a1 ihrer Anlageflächen 28 in eine geöffnete Schaltstellung überführt wird, während das Paar miteinander korrespondierenden Schaltelemente 12a mit der Erstreckung a3 ihrer Anlageflächen 28 noch in der geschlossenen Schaltstellung verbleibt. Die daraus folgende Änderung der Stromstärke lässt sich entsprechend auswerten. Nimmt die Zugkraft weiter zu, d.h. überschreitet die Relativbewegung den der Erstreckung a3 entsprechenden Abstand, wird auch dieses Paar miteinander korrespondierender Schaltelemente 12a in die geöffnete Schaltstellung überführt, wodurch der Schalter 6c vollständig geöffnet ist.

Diese Ausgestaltung der Anlageflächen 28 der miteinander korrespondierenden Schaltelemente 12a mit unterschiedlichen Erstreckung a1 und a3 ist auf die weiter oben beschriebene zweite Ausführungsform des Schalters 6b übertragbar.

Die Detektion von Druckkräften durch die Schaltelemente 12c erfolgt wie weiter oben bereits ausgeführt. Die miteinander korrespondierenden Schaltelemente 12c sind mit einem Abstand a2 zueinander angeordnet. Der Abstand a2 legt fest, wann die stirnseitigen Anlageflächen 28 der Schaltelemente 12c aufgrund einer durch die Drucckraft hervorgerufene Relativbewegung der Lasteinleitungselemente 11a, 11b einander berühren, wodurch diese in eine geschlossene Schaltstellung überführt werden.

### Bezugszeichen

- 1: Fahrwerk
- 2: Fahrzeug
- 3: Fahrwerkbauteil
- 4: Wagenheber
- 5: Parkplatzfläche
- 6: Sensor
- 6a: Schalter
- 6b: Schalter
- 6c: Schalter
- 7: Lasteinleitungsbereich
- 8: Verbindungsabschnitt
- 9: Tragprofil
- 10: Randbereich
- 11: Lasteinleitungselement
- 11a: Lasteinleitungselement
- 11b: Lasteinleitungselement
- 12: Schaltelement
- 12a: Schaltelement
- 12b: Schaltelement
- 12c: Schaltelement
- 13: Bauteil
- 14: Ende von 13
- 15: Freies Ende von 13
- 16: Befestigungselement
- 17: Kontaktbereich
- 18: Kontaktbereich
- 19: Anlagefläche
- 20: Schaltung
- 21: Stromquelle
- 22: Verbraucher
- 23: Leitung
- 24: Leitung
- 25: Leitung
- 26: Verbindungselement
- 27: freies Ende von 12a, 12b, 12c
- 28: Anlagefläche
- 29: Leitung
- 30: Längsachse
- 31: Aufnahme

- a1: Erstreckung
- a2: Abstand
- a3: Erstreckung
- B: Biegebelastung
- d1: Erstreckung
- d2: Erstreckung
- d3: Abstand
- F: Kraft

## Patentansprüche

1. Fahrwerkbauteil (3) für ein Kraftfahrzeug, umfassend zumindest zwei Lasteinleitungsbereiche (7), die jeweils durch einen Verbindungsabschnitt (8) miteinander verbunden sind, wobei an dem Fahrwerkbauteil (3) zumindest ein Sensor (6) zur Detektion einer mechanischen Belastung angeordnet ist, **dadurch gekennzeichnet, dass** der zumindest eine Sensor (6) als ein Schalter (6a, 6b, 6c) einer elektrischen Schaltung (20) ausgeführt ist, mit zumindest zwei Lasteinleitungselementen (11a, 11b), an denen jeweils zumindest ein Schaltelement (12, 12a, 12b, 12c) angeordnet ist, die in eine offene und eine geschlossene Schaltstellung überführbar sind, wobei jeweils ein Lasteinleitungselement (11a, 11b) mit einem der Lasteinleitungsbereiche (7) verbunden ist, durch welche eine in axialer Richtung des Verbindungsabschnittes (8) wirkende Belastung auf das jeweilige Lasteinleitungselement (11, 11a, 11b) übertragbar ist, wobei eine Überschreitung eines Belastungsgrenzwertes durch eine von den zumindest zwei Lasteinleitungselementen (11a, 11b) aufgenommene Belastung eine Änderung einer Schaltstellung zumindest zweier miteinander korrespondierender Schaltelemente (12, 12a, 12b, 12c) bewirkt.

2. Fahrwerkbauteil (3) nach Anspruch 1, **dadurch gekennzeichnet, dass** die Schaltung (20) eine Stromquelle (22) umfasst, die als externe Stromquelle oder als eine in das Fahrwerkbauteil (3) integrierte Stromquelle ausgeführt ist.

3. Fahrwerkbauteil (3) nach Anspruch 1 oder 2, **dadurch gekennzeichnet, dass** zumindest zwei korrespondierend angeordnete Schaltelemente (12, 12a, 12b) sich bei einer unterhalb des Belastungsgrenzwertes liegenden Belastung in der geschlossenen Schaltstellung befinden.

4. Fahrwerkbauteil (3) nach einem der Ansprüche 1 bis 3, **dadurch gekennzeichnet, dass** die Lasteinleitungselemente (11, 11a, 11b) parallel zum Verbindungsabschnitt (7) und gegenüber dem Verbindungsabschnitt (7) relativbeweglich angeordnet sind.

5. Fahrwerkbauteil (3) nach einem der Ansprüche 1 bis 4, **dadurch gekennzeichnet, dass** das jeweilige Lasteinleitungselement (11) als ein stabförmiges Bauteil (13) ausgeführt ist, welches mit einem Ende (14) mit einem der Lasteinleitunasbereiche (7) verbunden ist und mit seinem freien Ende (15) dem gegenüberliegenden Lasteinleitungsbereich (7) zugewandt ist.

6. Fahrwerkbauteil (3) nach Anspruch 5, **dadurch gekennzeichnet, dass** die Schaltelemente (12) an einander in axialer Richtung überlappenden Abschnitten an den freien Enden (15) der einander gegenüberliegend angeordneten Lasteinleitungselemente (11) als elektrisch leitende Kontaktbereiche (17, 18) ausgebildet sind, die in geschlossener Schaltstellung einander berühren.

7. Fahrwerkbauteil (3) nach Anspruch 6, **dadurch gekennzeichnet, dass** an den freien Enden (15) des Bauteils (13) jeweils zwei elektrisch leitende Kontaktbereiche (17, 18) angeordnet sind, wobei ein Kontaktbereich (17) mit einer ersten Erstreckung (d1) und ein Kontaktbereich (18) mit einer zweiten Erstreckung (d2) in axialer Richtung des Bauteils (13) ausgeführt ist, wobei die erste Erstreckung (d1) größer als die zweite Erstreckung (d2) ist.

8. Fahrwerkbauteil (3) nach einem der Ansprüche 5 bis 7, **dadurch gekennzeichnet, dass** die freien Enden (15) der einander gegenüberliegend angeordneten Lasteinleitungselemente (11) komplementäre, rampenförmige Anlageflächen (19) aufweisen, die in geschlossener Schaltstellung der Schaltelemente (12) einen axialen Abstand (d3) zueinander aufweisen.

9. Fahrwerkbauteil (3) nach Anspruch 8, **dadurch gekennzeichnet, dass** der axiale Abstand (d3) der Anlageflächen (19) zueinander kleiner als die erste Erstreckung (d1) und größer als die zweite Erstreckung (d2) ist.

10. Fahrwerkbauteil (3) nach einem der Ansprüche 1 bis 4, **dadurch gekennzeichnet, dass** das jeweilige Lasteinleitungselement (11a, 11b) durch ein stabförmiges, elektrisch leitend ausgeführtes Verbindungselement (26) mit einem der Lasteinleitungsbereiche (7) verbunden ist und die parallel zueinander angeordneten Lasteinleitungselemente (11a, 11b) durch die miteinander korrespondierenden Schaltelemente (12a, 12b, 12c) elektrisch leitend miteinander verbindbar sind.

11. Fahrwerkbauteil (3) nach Anspruch 10, **dadurch gekennzeichnet, dass** die miteinander korrespondierenden Schaltelemente (12a, 12b, 12c) an ihren freien Enden (27) jeweils einander zugewandt angeordnete elektrisch leitende Anlageflächen (28) aufweisen, durch die miteinander korrespondierenden Schaltelemente (12a, 12b, 12c) in geschlossener Schaltstellung leitend verbunden sind.

12. Fahrwerkbauteil (3) nach Anspruch 11, **dadurch gekennzeichnet, dass** die Anlageflächen (28) unterschiedliche Erstreckungen (a1, a3) aufweisen.

13. Fahrwerkbauteil (3) nach einem der Ansprüche 10 bis 12, **dadurch gekennzeichnet, dass** zumindest ein Paar miteinander korrespondierender Schaltelemente (12c) zur Detektion einer über die Lasteinleitungsbereiche (7) eingeleiteten Druckkraft aus einer geöffneten Schaltstellung in eine geschlossene Schaltstellung überführbar ist.

14. Fahrwerkbauteil (3) nach einem der Ansprüche 1 bis 13, **dadurch gekennzeichnet, dass** zumindest jedes Schaltelement (12, 12a, 12b, 12c) der Lasteinleitungselemente (11, 11a, 11b) durch eine separate Leitung (29) mit der Schaltung (20) verbunden ist.

15. Verwendung eines Sensors (6) zur Detektion einer mechanischen Belastung an einem Fahrwerkbauteil (3) für ein Kraftfahrzeug, wobei das Fahrwerkbauteil (3) zumindest zwei Lasteinleitungsbereiche (7), die jeweils durch einen Verbindungsabschnitt (8) miteinander verbunden sind, umfasst, **dadurch gekennzeichnet, dass** der zumindest eine verwendete Sensor (6) als ein Schalter (6a, 6b, 6c) einer elektrischen Schaltung (20) ausgeführt ist, mit zumindest zwei Lasteinleitungselementen (11, 11a, 11b), an denen jeweils zumindest ein Schaltelement (12, 12a, 12b, 12c) angeordnet ist, die in eine offene Schaltstellung und eine geschlossene Schaltstellung überführbar sind, wobei jeweils ein Lasteinleitungselement (11, 11a, 11b) mit einem der Lasteinleitungsbereiche (7) verbunden ist, durch welche eine in axialer Richtung des Verbindungsabschnittes (8) wirkende Belastung auf das jeweilige Lasteinleitungselement (11, 11a, 11b) übertragen wird, wobei eine Überschreitung eines Belastungsgrenzwertes durch eine von den zumindest zwei Lasteinleitungselementen (11, 11a, 11b) aufgenommene Belastung eine Änderung einer Schaltstellung zumindest zweier miteinander korrespondierender Schaltelemente (12, 12a, 12b, 12c) bewirkt.

## Claims

1. Chassis component (3) for a motor vehicle, comprising at least two load introduction regions (7) which are connected to each other by a connecting section (8), wherein at least one sensor (6) for detecting a mechanical load is arranged on the chassis component (3), **characterized in that** the at least one sensor (6) is designed as a switch (6a, 6b, 6c) of an electric circuit (20), having at least two load introduction elements (11a, 11b), on each of which at least one switching element (12, 12a, 12b, 12c) is arranged, which switching elements can be moved to an open and a closed switching position, wherein in each case one load introduction element (11a, 11b) is connected to one of the load introduction regions (7), by which a load acting in an axial direction of the connecting section (8) can be transmitted to the respective load introduction element (11, 11a, 11b), wherein overshooting of a load limit value by a load received by the at least two load introduction elements (11a, 11b) causes a change in a switching position of at least two switching elements (12, 12a, 12b, 12c), which correspond to each other.

2. Chassis component (3) according to Claim 1, **characterized in that** the circuit (20) comprises a power source (22) which is designed as an external power source or as a power source integrated into the chassis component (3).

3. Chassis component (3) according to Claim 1 or 2, **characterized in that** at least two correspondingly arranged switching elements (12, 12a, 12b) are in the closed switching position when a load is below the load limit value.

4. Chassis component (3) according to one of Claims 1 to 3, **characterized in that** the load introduction elements (11, 11a, 11b) are arranged parallel to the connecting section (8) and relatively movably with respect to the connecting section (8).

5. Chassis component (3) according to one of Claims 1 to 4, **characterized in that** the respective load introduction element (11) is designed as a rod-like component (13) which by way of one end (14) is connected to one of the load introduction regions (7) and by way of its free end (15) faces the opposite load introduction region (7).

6. Chassis component (3) according to Claim 5, **characterized in that** the switching elements (12) are formed as electrically conductive contact regions (17, 18), which make contact with each other in the closed switching position, on sections, which overlap in the axial direction, at the free ends (15) of the load introduction elements (11) arranged opposite each other.

7. Chassis component (3) according to Claim 6, **characterized in that** two electrically conductive contact regions (17, 18) are arranged at each of the free ends (15) of the component (13), wherein one contact region (17) is designed with a first extent (d1) and one contact region (18) is designed with a second extent (d2) in the axial direction of the component (13), wherein the first extent (d1) is greater than the second extent (d2).

8. Chassis component (3) according to one of Claims 5 to 7, **characterized in that** the free ends (15) of the load introduction elements (11) arranged opposite each other have complementary, ramp-like contact areas (19) which are at an axial spacing (d3) from each another in the closed switching position of the switching elements (12) .

9. Chassis component (3) according to Claim 8, **characterized in that** the axial spacing (d3) of the contact areas (19) from each other is smaller than the first extent (d1) and greater than the second extent (d2) .

10. Chassis component (3) according to one of Claims 1 to 4, **characterized in that** the respective load introduction element (11a, 11b) is connected to one of the load introduction regions (7) by a rod-like, electrically conductive connecting element (26) and the load introduction elements (11a, 11b) arranged parallel to each other can be electrically conductively connected to each other by the switching elements (12a, 12b, 12c), which correspond to each other.

11. Chassis component (3) according to Claim 10, **characterized in that** the switching elements (12a, 12b, 12c), which correspond to each other, each have at their free ends (27) electrically conductive contact areas (28) arranged facing each other and by which the switching elements (12a, 12b, 12c), which correspond to each other, are conductively connected in the closed switching position.

12. Chassis component (3) according to Claim 11, **characterized in that** the contact areas (28) have different extents (a1, a3).

13. Chassis component (3) according to one of Claims 10 to 12, **characterized in that** at least one pair of switching elements (12c), which correspond to each other, can be moved from an open switching position to a closed switching position for detecting a pressure force introduced via the load introduction regions (7).

14. Chassis component (3) according to one of Claims 1 to 13, **characterized in that** at least each switching element (12, 12a, 12b, 12c) of the load introduction elements (11, 11a, 11b) is connected to the circuit (20) by a separate line (29).

15. Use of a sensor (6) for detecting a mechanical load on a chassis component (3) for a motor vehicle, wherein the chassis component (3) comprises at least two load introduction regions (7) which are connected to each other by a connecting section (8), **characterized in that** the at least one sensor (6) used is designed as a switch (6a, 6b, 6c) of an electric circuit (20), having at least two load introduction elements (11, 11a, 11b), on each of which at least one switching element (12, 12a, 12b, 12c) is arranged, which switching elements can be moved to an open and a closed switching position, wherein in each case one load introduction element (11, 11a, 11b) is connected to one of the load introduction regions (7), by which a load acting in an axial direction of the connecting section (8) is transmitted to the respective load introduction element (11, 11a, 11b), wherein overshooting of a load limit value by a load received by the at least two load introduction elements (11, 11a, 11b) causes a change in a switching position of at least two switching elements (12, 12a, 12b, 12c), which correspond to each other.

## Revendications

1. Composant de train roulant (3) pour un véhicule automobile, comprenant au moins deux zones d'application de charge (7) qui sont respectivement reliées entre elles par une section de liaison (8), au moins un capteur (6) de détection d'une charge mécanique étant agencé sur le composant de train roulant (3), **caractérisé en ce que** ledit au moins un capteur (6) est réalisé sous la forme d'un commutateur (6a, 6b, 6c) d'un circuit électrique (20), avec au moins deux éléments d'application de charge (11a, 11b), sur lesquels est agencé respectivement au moins un élément de commutation (12, 12a, 12b, 12c), qui sont aptes à être amenés dans une position de commutation ouverte et une position de commutation fermée, un élément d'application de charge (11a, 11b) étant relié à l'une, respective, des zones d'application de charge (7), par laquelle une charge agissant dans la direction axiale de la section de liaison (8) est transmise à l'élément d'application de charge (11, 11a, 11b) respectif, un dépassement d'une valeur limite de charge par une charge reçue par les au moins deux éléments d'application de charge (11a, 11b) entraînant un changement dans une position de commutation d'au moins deux éléments de commutation (12, 12a, 12b, 12c) se correspondant mutuellement.

2. Composant de train roulant (3) selon la revendication 1, **caractérisé en ce que** le circuit (20) comprend une source de courant (22) qui est réalisée sous la forme d'une source de courant externe ou d'une source de courant intégrée dans le composant de train roulant (3) .

3. Composant de train roulant (3) selon la revendication 1 ou la revendication 2, **caractérisé en ce qu'**au moins deux éléments de commutation (12, 12a, 12b) agencés de manière correspondante se trouvent dans la position de commutation fermée lorsque la charge est inférieure à la valeur limite de charge.

4. Composant de train roulant (3) selon l'une des revendications 1 à 3, **caractérisé en ce que** les éléments d'application de charge (11, 11a, 11b) sont agencés parallèlement à la section de liaison (8) et de manière à pouvoir se déplacer relativement, par rapport à la section de liaison (8).

5. Composant de train roulant (3) selon l'une des revendications 1 à 4, **caractérisé en ce que** l'élément d'application de charge (11) respectif est réalisé sous la forme d'un composant (13) en forme de barre, qui est relié par une extrémité (14) à l'une des zones d'application de charge (7) et est tourné par son extrémité libre (15) vers la zone d'application de charge (7) opposée.

6. Composant de train roulant (3) selon la revendication 5, **caractérisé en ce que** les éléments de commutation (12) sont réalisés sous forme de zones de contact (17, 18) électriquement conductrices sur des sections se chevauchant dans la direction axiale au niveau des extrémités libres (15) des éléments d'application de charge (11) agencés en face les uns des autres, qui se touchent en position de commutation fermée.

7. Composant de train roulant (3) selon la revendication 6, **caractérisé en ce que** deux zones de contact (17, 18) électriquement conductrices sont respectivement agencées aux extrémités libres (15) du composant (13), une zone de contact (17) étant réalisée avec une première extension (d1) et une zone de contact (18) avec une deuxième extension (d2) dans la direction axiale du composant (13), la première extension (d1) étant supérieure à la deuxième extension (d2).

8. Composant de train roulant (3) selon l'une des revendications 5 à 7, **caractérisé en ce que** les extrémités libres (15) des éléments d'application de charge (11) agencés en regard l'un de l'autre présentent des surfaces de contact (19) complémentaires en forme de rampe, qui présentent un écartement axial (d3) l'une par rapport à l'autre lorsque les éléments de commutation (12) sont en position de commutation fermée.

9. Composant de train roulant (3) selon la revendication 8, **caractérisé en ce que** la distance axiale (d3) des surfaces de contact (19) entre elles est inférieure à la première extension (d1) et supérieure à la deuxième extension (d2).

10. Composant de train roulant (3) selon l'une des revendications 1 à 4, **caractérisé en ce que** l'élément d'application de charge (11a, 11b) respectif est relié à l'une des zones d'application de charge (7) par un élément de liaison (26) en forme de tige, réalisé de manière à conduire l'électricité, et les éléments d'application de charge (11a, 11b) agencés parallèlement l'un à l'autre sont aptes à être reliés entre eux de manière à conduire l'électricité par les éléments de commutation (12a, 12b, 12c) qui se correspondent mutuellement.

11. Composant de train roulant (3) selon la revendication 10, **caractérisé en ce que** les éléments de commutation (12a, 12b, 12c) qui se correspondent présentent, à leurs extrémités libres (27), des surfaces de contact (28) conductrices de l'électricité, agencées chacune en face les unes des autres, par lesquelles les éléments de commutation (12a, 12b, 12c) qui se correspondent mutuellement sont reliés de manière conductrice en position de commutation fermée.

12. Composant de train roulant (3) selon la revendication 11, **caractérisé en ce que** les surfaces de contact (28) présentent des extensions différentes (a1, a3) .

13. Composant de train roulant (3) selon l'une des revendications 10 à 12, **caractérisé en ce qu'**au moins une paire d'éléments de commutation (12c) correspondant l'un à l'autre est apte à passer d'une position de commutation ouverte à une position de commutation fermée pour détecter une force de pression introduite par les zones d'application de charge (7).

14. Composant de train roulant (3) selon l'une des revendications 1 à 13, **caractérisé en ce qu'**au moins chaque élément de commutation (12, 12a, 12b, 12c) des éléments d'application de charge (11, 11a, 11b) est relié au circuit (20) par une ligne séparée (29).

15. Utilisation d'un capteur (6) pour la détection d'une charge mécanique sur un élément de châssis (3) pour un véhicule automobile, l'élément de châssis (3) comprenant au moins deux zones d'application de charge (7) qui sont chacune reliées entre elles par une section de liaison (8), **caractérisé en ce que** ledit au moins un capteur (6) utilisé est réalisé sous la forme d'un commutateur (6a, 6b, 6c) d'un circuit électrique (20), avec au moins deux éléments d'application de charge (11, 11a, 11b), sur lesquels est agencé respectivement au moins un élément de commutation (12, 12a, 12b, 12c), qui sont aptes à être amenés dans une position de commutation ouverte et une position de commutation fermée, un élément d'application de charge (11, 11a, 11b) étant respectivement relié à l'une des zones d'application de charge (7), par laquelle une charge agissant dans la direction axiale de la section de liaison (8) est transmise à l'élément d'application de charge (11, 11a, 11b) respectif, un dépassement d'une valeur limite de charge en raison d'une une charge reçue par les au moins deux éléments d'application de charge (11, 11a, 11b) provoquant un changement dans une position de commutation d'au moins deux éléments de commutation (12, 12a, 12b, 12c) se correspondant mutuellement.
